(19) Europäisches Patentamt
European Patent Office
Office européen des brevets

(11) EP 4 729 446 A1

(12) EUROPEAN PATENT APPLICATION

(43) Date of publication:
22.04.2026 Bulletin 2026/17

(21) Application number: 24207490.4

(22) Date of filing: 18.10.2024

(51) International Patent Classification (IPC):
B65G 43/00 (2006.01)    B65G 67/04 (2006.01)
B65G 67/06 (2006.01)    B65G 67/22 (2006.01)
E02F 9/20 (2006.01)    G06Q 10/08 (2024.01)

(52) Cooperative Patent Classification (CPC):
B65G 67/04; B60P 1/00; B65G 43/00; B65G 67/06;
B65G 67/22; E02F 9/2045; E02F 9/2054;
G06Q 10/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Volvo Autonomous Solutions AB
405 08 Göteborg (SE)

(72) Inventors:
• SKILLSÄTER, Calle
644 36 TORSHÄLLA (SE)
• SJÖBERG, Johan
722 19 VÄSTERÅS (SE)

(74) Representative: Kransell & Wennborg KB
P.O. Box 2096
403 12 Göteborg (SE)

Remarks:
Amended claims in accordance with Rule 137(2)
EPC.

(54) LOADING OF VEHICLES FROM SILO

(57) In an aspect, a computer system (29) is provided and configured to control loading of material (40) from a silo (30) onto a vehicle (10, 20). The computer system comprises processing circuitry (26) configured to control (S 101) a first vehicle (10) to drive according to a first speed profile (S 1) for attaining a target weight (W) of the material (40) being discharged from the silo (30) into a loading space (15) of the first vehicle (10), acquire (S102) an indication of a weight (W1) of the material (40) loaded into the loading space (15) of the first vehicle (10), and to control (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S 1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

Fig. 4

EP 4 729 446 A1

## Description

## TECHNICAL FIELD

The disclosure relates to controlling loading of material from a silo onto a vehicle. In particular aspects, the disclosure relates to accurate control of speed of a vehicle during loading from a silo. The disclosure can be applied in vehicles such as cars, buses, lightweight trucks, mid-weight trucks, heavy-duty trucks, construction equipment and machines, trains and marine vessels. Although the disclosure may be described with respect to a particular vehicle, the disclosure is not restricted to any particular vehicle.

## BACKGROUND

When loading a vehicle such as a truck, train car, construction machine, etc., from a silo, the driver of the vehicle positions the vehicle under an outlet of the silo. The silo outlet is then opened, and the driver operates the vehicle to move such that the outlet moves relatively to the vehicle from one end of a loading space of the vehicle to the other end for filling up the loading space with material discharged from the silo, wherein the silo outlet is closed and the truck drives away.

In practice, this loading process is unprecise with respect to the weight of the material finally being loaded into the loading space and oftentimes plays out as a guessing game for the driver. The weight of the material loaded into the loading space may further vary in density, thereby making the weight estimation difficult. This leads to both under- and overloading of the loading space.

## SUMMARY

According to a first aspect of the disclosure, a computer system is provided configured to control loading of material from a silo onto a vehicle. The computer system comprising processing circuitry configured to control a first vehicle to drive according to a first speed profile for attaining a target weight of the material being discharged from the silo into a loading space of the first vehicle, acquire an indication of a weight of the material loaded into the loading space of the first vehicle and to control a second vehicle to drive according to a second speed profile for attaining the target weight of the material being discharged from the silo into a loading space of the second vehicle, the second speed profile being adapted to the first speed profile such that time spent under the silo for the second vehicle is shorter than for the first vehicle if the weight of the material loaded onto the first vehicle indicates that the target weight was exceeded or such that time spent under the silo for the second vehicle is longer than for the first vehicle if the weight of the material loaded onto the first vehicle indicates that the target weight was not reached.

The first aspect of the disclosure may seek to resolve an issue of how to closely control movement of a vehicle under a silo. A technical benefit may include enabling more accurately loading of material onto a vehicle from a silo.

In some examples, the processing circuitry is further configured to acquire an indication of a weight of the material loaded into the loading space of the second vehicle and to control a third vehicle to drive according to a third speed profile for attaining the target weight of the material being discharged from the silo into a loading space of the third vehicle, the third speed profile being adapted to the second speed profile such that time spent under the silo for the third vehicle is shorter than for the second vehicle if the weight of the material loaded onto the second vehicle indicates that the target weight was exceeded or such that time spent under the silo for the third vehicle is longer than for the second vehicle if the weight of the material loaded onto the second vehicle indicates that the target weight was not reached. A technical benefit may include enabling more accurately loading of material onto a fleet of vehicles from a silo.

In some examples, the processing circuitry is further configured to, upon acquiring an indication of a weight of the material loaded into the loading space of the first vehicle, acquire information identifying the silo from which the first vehicle was loaded and/or type of material being loaded onto the first vehicle, wherein the second speed profile of said second vehicle is further adapted based on said information identifying the silo and/or the type of material. A technical benefit may include enabling more accurately loading of material onto a fleet of vehicles from different silos.

In some examples, the first speed profile indicates that the first vehicle should be driven under the silo at a set first speed or at a varying speed with an average speed amounting to the set first speed. A technical benefit may include enabling more accurately loading of material regardless of whether the vehicle moves under the silo at a constant or different speed.

In some examples, the first speed is set to a pre-stored reference speed associated with the specific silo from which the first vehicle is loaded and/or the type of material (30) being loaded. A technical benefit may include adapting speed of a vehicle to different silos.

In some examples, the processing circuitry is further being configured to, upon controlling the second vehicle to drive according at the second speed profile, set the speed of the second vehicle to:

$$S2 = S1 * \frac{W}{W1}$$

where S2 represents the second speed, S1 represents the first speed, W represents the target weight and W1 represents the acquired weight of the material loaded into the loading space of the first vehicle. A technical benefit may include enabling more carefully controlling speed of the vehicles moving under the silo.

In some examples, the processing circuitry is further being configured to, upon controlling the second vehicle to drive according to a second speed profile, adjust the second speed with respect to the first speed in fixed steps based on a degree of overload or underload of the first vehicle as compared to the target weight. A technical benefit may include enabling more carefully controlling speed of the vehicles moving under the silo.

In some examples, the processing circuitry is further being configured to detect clogging of the material in the silo if the weight of the material loaded onto any of the vehicles is significantly lower than the target weight, such as lower than the target weight by a set weight difference value. A technical benefit may include enabling resolving clogging of a silo.

In some examples, the processing circuitry is further being configured to control the first vehicle to move to a selected start position under the silo upon loading the material into the loading space of the first vehicle and to control the first vehicle to move to a selected stop position under the silo upon loading the material into the loading space of the first vehicle for attaining a desired distribution of the material in the loading space, wherein the acquiring of an indication of a weight of the material loaded into the loading space of the first vehicle further comprises to acquire information indicating a distribution of the material in the loading space of the first vehicle, and wherein the control of the second vehicle to drive according to the second speed profile for attaining the target weight of the material being discharged from the silo into a loading space of the second vehicle further comprises taking into account said start and stop position of the first vehicle for attaining a desired distribution of the material in the loading space of the second vehicle. A technical benefit may include enabling more accurate distribution of loaded material onto a vehicle from a silo.

In some examples, the processing circuitry is further being configured to, upon controlling the second vehicle to drive according to a second speed profile, select a start position at the front end of the loading space and a stop position on a selected distance from the rear end of the loading space, if a rear heavy distribution is desired. A technical benefit may include enabling a desired distribution of loaded material onto a vehicle from a silo.

In some examples, the processing circuitry is further being configured to, upon controlling the second vehicle to drive according to a second speed profile, select a start position on a selected distance from the front end of the loading space and a stop position at the rear end of the loading space, if a front heavy distribution is desired. A technical benefit may include enabling a desired distribution of loaded material onto a vehicle from a silo.

In some examples, the front axle and/or rear axle of the vehicle is being measured for acquiring the information indicating a distribution of the material in the loading space of the first vehicle, wherein a front axle load exceeding a front load threshold value indicates that the loaded material should be moved away from the front end of the loading space of the second vehicle, while a rear axle load exceeding a rear load threshold indicates that the loaded material should be moved towards the front end of the loading space of the second vehicle. A technical benefit may include enabling a desired distribution of loaded material onto a vehicle from a silo.

In some examples, the processing circuitry is being configured to autonomously control operation of the vehicles and the discharging of the material from the silo.

In some examples, a server is provided comprising the computer system of any of the examples of the first aspect. A technical benefit may include enabling remotely controlling the loading of a vehicle from a silo.

According to a second aspect of the disclosure, method of a device configured to control loading of material from a silo onto a vehicle is provided. The method comprises controlling a first vehicle to drive according to a first speed profile for attaining a target weight of the material being discharged from the silo into a loading space of the first vehicle, acquiring an indication of a weight of the material loaded into the loading space of the first vehicle and controlling a second vehicle to drive according to a second speed profile for attaining the target weight of the material being discharged from the silo into a loading space of the second vehicle, the second speed profile being adapted to the first speed profile such that time spent under the silo for the second vehicle is shorter than for the first vehicle if the weight of the material loaded onto the first vehicle indicates that the target weight was exceeded or such that time spent under the silo for the second vehicle is longer than for the first vehicle if the weight of the material loaded onto the first vehicle indicates that the target weight was not reached.

In some examples, a computer program product is provided comprising program code for performing, when executed by the processing circuitry, the method of the second aspect.

In some examples, a non-transitory computer-readable storage medium is provided comprising instructions, which when executed by the processing circuitry, cause the processing circuitry to perform the method of the second aspect.

According to a third aspect of the disclosure, a computer system of a vehicle is provided and configured to control loading of material from a silo onto the vehicle, the computer system comprising processing circuitry configured to acquire an indication of a weight of material being discharged from the silo into a loading space of a previous vehicle and to control the vehicle to be loaded to drive according to a second speed profile for attaining a target weight of the material being discharged from the silo into a loading space of the vehicle to be loaded, the second speed profile being adapted to a speed profile of the previous vehicle such that time spent under the silo for the second vehicle is shorter than for the first vehicle if the weight of the material loaded onto the previous vehicle indicates that the target weight was exceeded or such that time spent under the silo for the second vehicle is longer than for the previous vehicle if the weight of the material loaded onto the previous vehicle indicates that the target weight was not reached.

The third aspect of the disclosure may seek to resolve an issue of how to closely control movement of a vehicle under a silo. A technical benefit may include enabling more accurately loading of material onto a vehicle from a silo.

In some examples, a vehicle is provided comprising the computer system of the third aspect.

In some examples, the vehicle is configured to be autonomous or semi-autonomous.

BRIEF DESCRIPTION OF THE DRAWINGS

With reference to the appended drawings, below follows a more detailed description of aspects of the disclosure cited as examples.

FIG. 1 illustrates a vehicle in the form of a truck in which examples of the present disclosure may be implemented.

FIG. 2 shows an exemplary system diagram of a computer system with which the truck of FIG. 1 is equipped according to the present disclosure.

FIG. 3-5 illustrate a truck being controlled to move under a silo for loading according to the present disclosure.

FIG. 6 shows a flowchart illustrating an example of controlling loading of material from a silo onto a vehicle according to the present disclosure.

FIG. 7 illustrates another truck being controlled to move under a silo for loading according to the present disclosure.

FIG. 8 illustrates a truck being controlled to move to either one of three silos for loading according to the present disclosure.

FIG. 9 shows a flowchart illustrating another example of controlling loading of material from a silo onto a vehicle according to the present disclosure.

FIG. 10 is a schematic diagram of a computer system for implementing examples disclosed herein.

DETAILED DESCRIPTION

Aspects set forth below represent the necessary information to enable those skilled in the art to practice the disclosure.

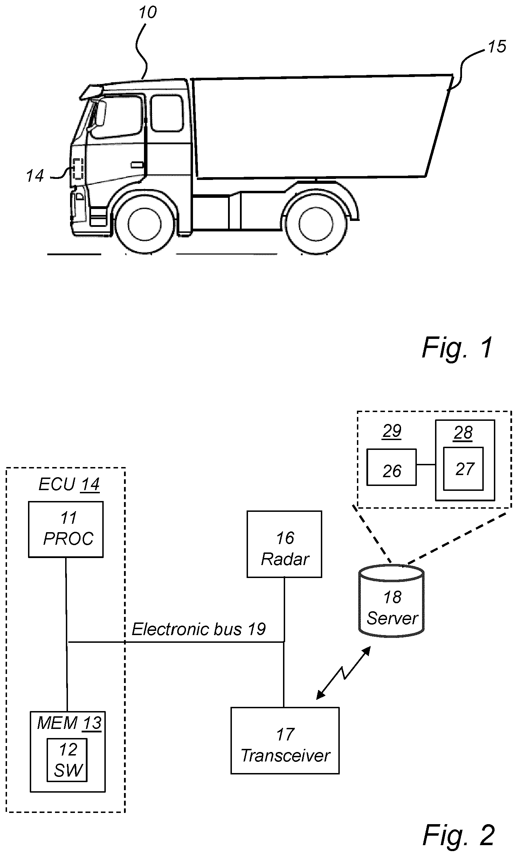

FIG. 1 illustrates a vehicle in the form of a truck 10 in which examples of the present disclosure may be implemented, the truck 10 being equipped with a computer system 14, e.g. in the form of a so-called Electronic Control Unit (ECU) controlling operation of the truck 10. In case of the truck 10 being autonomously operated, the ECU 14 it typically responsible for such operations. The truck 10 is further arranged with a loading space 15 into which material may be loaded. Although the vehicle 10 in FIG. 1 is depicted as a heavy-duty truck, examples of the present disclosure may be implemented in other types of vehicles arranged with a loading space integrated with the vehicle or provided in the form of e.g. a trailer, such as in passenger cars, busses, light-duty trucks, mid-duty trucks, construction machines and equipment, trains, marine vessels, etc. As is understood, the truck 10 may be capable of partly or fully autonomous driving or provided with adaptive cruise control (ACC).

FIG. 2 shows an exemplary system diagram of the computer system 14 with which the truck 10 of FIG. 1 is equipped according to the present disclosure. The computer system 14 will in the following be exemplified by an ECU 14.

The ECU 14 generally comprises processing circuitry (PROC) 11 and a storage medium (MEM) 13 associated with the processing circuitry, such as a Random Access Memory (RAM), a Flash memory or a hard disk drive. One or more computer programs (SW) 12 may be stored in the storage medium 13.

The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc.

For detecting surrounding vehicles, objects and individuals, the ECU 14 is typically in communicative connection with one or more sensors 16 of the truck 10, such as e.g., radar, lidar, cameras, sonar, etc. In this example, the surroundings are monitored by a radar sensor 16. Thus, the autonomous operation of the truck 10 managed by the ECU 14 may be performed based on data collected by the radar sensor 16. The ECU 14 is further in communicative connection with a wireless communication device in the form of a wireless transmitter/receiver 17 (commonly referred to as a transceiver) for providing a wireless interface to the truck 10. As will be described in more detail, the ECU 14 may communicate wirelessly via the transceiver 17 with e.g. a remotely located server 18 storing useful data. The wireless communication of the transceiver 17 may be performed for instance via radio frequency (RF), Bluetooth, a wi-fi

Similar to the truck 10, the server 18 is typically arranged with a computer system 29 comprising processing circuitry 26 and a storage medium 28 associated with the processing circuitry. One or more computer programs 27 may be stored in the storage medium 18.

Communication between the various devices illustrated in FIG. 2 may occur via an electronic communication bus 19 such as e.g., a Controller Area Network (CAN) bus, a Local Interconnect Network (LIN) bus, an Ethernet bus, etc.

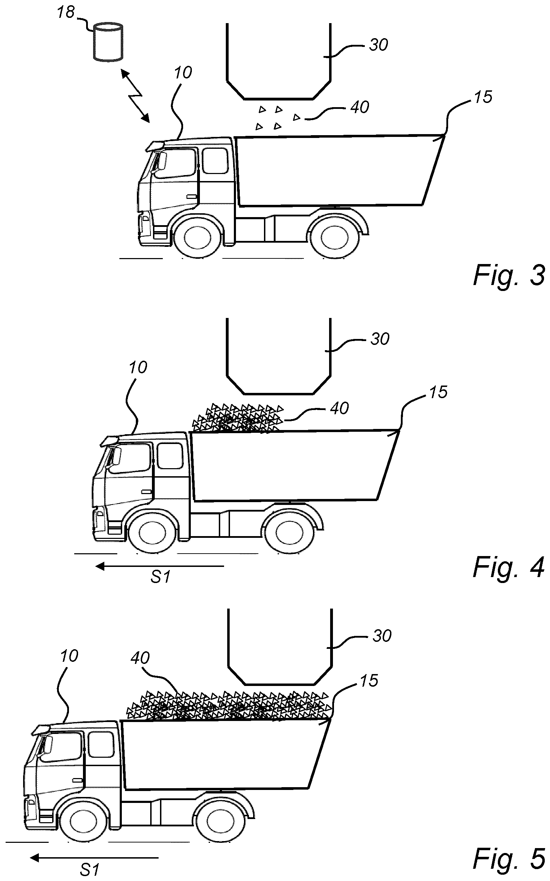

FIG. 3-5 illustrate loading of a first truck 10 from a silo 30 discharging material 40 into the loading space 15 of the truck 10 in an example of the disclosure. In this particular example, it is assumed that the truck 10 is autonomously operated by the computer system 29 of the server 18 communicating with the ECU 14 via the wireless transceiver 17 thus sending appropriate autonomous navigation instructions to the ECU 14 for operating the truck 10.

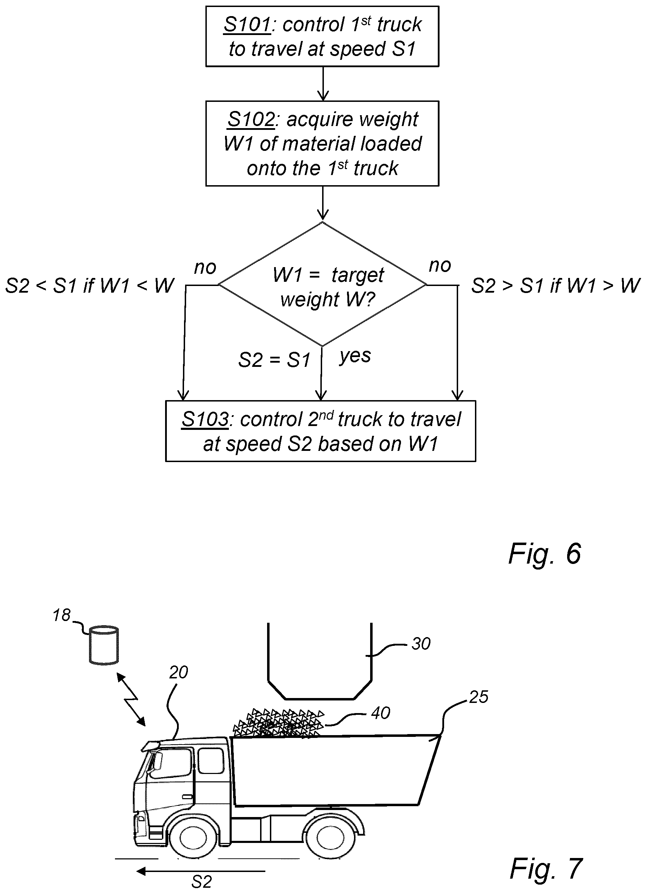

Reference will further be made to FIG. 6 showing a flowchart illustrating an example of a method of controlling loading of material from a silo onto a vehicle.

In FIG. 3, the ECU 14 controls operation of the first truck 10 such that truck 10 is positioned under an outlet of the silo 30. In other words, the truck 10 is positioned such that a front end of the loading space 15 is positioned just under the outlet of the silo 30, whereupon the server 18 or alternatively the ECU 14 may send an instruction to a control unit of the silo 30 to open the silo outlet and start discharging the material 40 into the loading space 15.

As shown in FIG. 4, the ECU 14 operates the truck 10 in S101 to move in a forward direction according to a first speed profile, which in this example is embodied by the truck 10 moving at a given speed S 1, as illustrated by the arrow while having the silo 30 discharge the material 40 into the loading space 15. As is understood, the speed S1 may be a constant speed with which the truck 10 is controlled to move under the silo 10, but the speed with which the truck 10 is controlled to move may alternatively vary, in which case the speed S1 e.g. may denote the average speed with which the truck 10 moves under the silo 30.

FIG. 5 illustrates that instructions are sent to the ECU 14 to have the truck travel at the speed S1 such that the outlet of the silo 30 moves relatively to the first truck 10 from the front one end of the loading space 15 to the rear end for completely filling up the loading space 15 with material discharged from the silo 30, wherein the silo outlet is closed by the server 18 sending an instruction accordingly and the first truck 10 is operated to drive away.

In this example, the first truck 10 is then operated by the server 18 and the ECU 14 to travel to an adjacently located scale for weighing the first truck 10 in order to acquire S 102 an indication of the weight W1 of the material 40 being loaded into the loading space 15 of the first truck 10. Typically, the (known) weight of the truck 10 is deducted from the total weight recorded by the scale in order to attain the weight W1 of the material loaded into the loading space 15 of the truck 10.

As is understood, there is a preconfigured target weight W that is aimed for when selecting the speed S1 upon loading the first truck 10, where optimally the weight W1 of the material 40 being loaded into the loading space 15 of the first truck 10 will amount to the desired target weight W, i.e. W1 = W

Thereafter, as illustrated in FIG. 6, as a second truck 20 is operated by the server 18 and a corresponding ECU of the second truck 20 (similarly as in FIG. 3-5) to position the second truck 20 with the loading space 25 under the outlet of the silo 30 for before instructing the silo 30 to discharge the material 40 into the loading space 25 of the second truck 20, the speed profile S2 according to which the second truck 20 is controlled to travel in S103 is set by taking into account the weight W1 of the material 40 loaded onto the first truck 10, as well as the speed S1 held by the first truck 10 during loading. Hence, the ECU of the second truck 20 acquires from the server 18 an indication of the weight of the material 40 loaded onto the first truck 10 and thereafter proceeds to control operation of the second truck 20.

Thus, the second truck 20 is controlled to drive at the second speed S2 for attaining the desired target weight W of the material 40 being discharged from the silo 30 and ultimately loaded into the loading space 25 of the second vehicle 20, where the second speed S2 is (a) adapted to be higher than the first speed S1 of the first truck 10 if the weight W1 of the material 40 loaded onto the first truck 10 indicates that the target weight W was exceeded or (b) adapted to be lower than the first speed S1 if the weight W1 of the material 40 loaded onto the first truck 10 indicates that the target weight W was not reached. In other words, in option a) the speed profile of the second truck 20 is adapted such that time spent under the silo 30 for the second truck 20 is shorter than for the first truck 10, while in option b) the speed profile of the second truck 20 is adapted such that time spent under the silo 30 for the second truck 20 is longer than for the first truck 10.

Accordingly, if the weight W1 of the material 40 loaded onto the first truck 10 equals the target weight W, then the speed S2 of the second truck 20 is set to be equal to the speed S1 of the first truck 10.

In other words, if the weight W1 of the material 40 loaded onto the first truck 10 exceeds the desired target weight W, then a lesser amount of material should be loaded onto the second truck 20, i.e. W2 < W1. To achieve this, the speed S2 of the second truck 20 is set to be higher than the speed S1 of the first truck 10, whereupon a lesser amount of material will be loaded onto the second truck 20 as compared to the first truck 10, resulting in a weight W2 closer to the target weight W.

Analogously, if the weight W1 of the material 40 loaded onto the first truck 10 is below the desired target weight W, then a greater amount of material should be loaded onto the second truck 20, i.e. W2 > W1. To achieve this, the speed S2 of the second truck 20 is set to be lower than the speed S1 of the first truck 10, whereupon a greater amount of material will be loaded onto the second truck 20 as compared to the first truck 10, again resulting in a weight W2 closer to the target weight W.

If the weight W1 of the material loaded onto the first truck 10 equals the target weight W, then the speed S2 of the second truck 20 is set to be equal to the speed S1 of the first truck 10.

Advantageously, this resolves the issues in the art with unprecise loading of the trucks 10, 20 causing under- and overloading of the loading spaces 15, 25. By taking into account the weight of one or more previously weighted trucks 10, the speed S2 of the truck 20 currently being loaded is adapted to the speed S1 with which the previously weighted truck 10 was operated upon loading the truck, which provides for a highly accurate loading process.

As is understood, the second truck 20 may in its turn be controlled to drive to the scale for weighing, wherein the weight W2 of the material 40 loaded onto the second truck 20 along with the speed S2 is stored at the server 18 for being taken into account upon loading yet another truck. Thus, assuming that the weight W2 still slightly exceeds (or alternatively is below) the target weight W, then a further adjustment of a speed S3 of said yet another truck to attain the target weight W for the weight W3 of the material being loaded onto said yet another truck. Typically, this is repeated until the target weight W is reached for all vehicles being loaded.

In an example, an identification of the silo 30 discharging the material 40 and/or an indication of the type of material 40 being discharged is further stored at the server 18 along with the information indicating the weight of the material 40 loaded into the loading space 15 of the first truck 10. The identification of the silo 30 may further comprise specific details regarding the silo, such as outlet material discharge rate in case different outlet mechanisms are used for different silos. The information indicating type of material may denote the material itself (e.g. wheat, gravel, oil, etc.) and/or density of the material.

In an example, the server 18 may hold different reference speeds S1 to be set for the first vehicle 10 for different types of materials and/or silos. For instance, wheat may correspond to reference speed S1a, gravel may correspond to reference speed S1b, while oil may correspond to reference speed S1c.

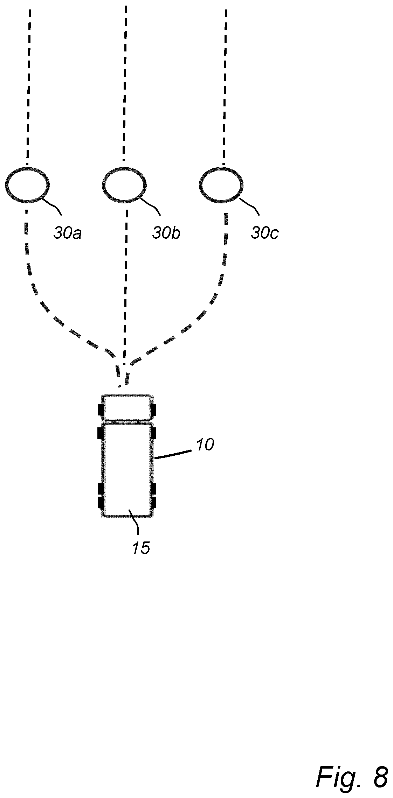

FIG. 8 illustrates the truck 10 alternately being loaded at three different silos 30a, 30b, 30c each containing a different type of material. In this scenario, the speed of the truck may well be controlled to be different at each respective silo 30a-c and the target weight to be attained may also be different for each silo. Thus, the speed of the truck 10 and that of any truck to be subsequently loaded at the silos 30a-c needs to be adjusted based on the specific silo and material type, which typically is not necessary if a number of trucks are loaded with identical material from the same silo.

In an example, the speed S2 of the second truck 20 can be adjusted (i.e. increased/decreased) in fixed steps in relation to the speed S1 of the first truck 10 based on the acquired weight W1 of the material 40 discharged from the silo 30 and loaded onto the first truck 10. In other words, the second speed S2 is adjusted with respect to the first speed S1 in fixed steps based on a degree of overload or underload of the first truck 10 as compared to the target weight W. For instance, for each x kg the weight W1 is offset from the target weight W, the second speed S2 is increased/decreased by y m/s with respect to the first speed S1.

In a further example, a more precise approach is envisaged where the speed S2 of the subsequent truck 20 is adapted by multiplying the speed S1 of the preceding truck 10 with the target weight W and divide with the measured weight of the load W1 of the preceding truck 10 according to:

$$S2 = S1 * \frac{W}{W1}$$

Assuming that the speed S1 of the first truck 10 is 0.5 m/s during loading and the target weight W of the material to be loaded into the loading space 15 of the first truck 15 is 1000 kg, while the actual weight W1 being loaded amounts to 950 kg; the speed S2 of the second truck 20 upon loading would then be set to 0.5 x (950/1000) = 0.475 m/s which results in a slightly higher weight W2 as compared to W1.

In an example, the server 18 the server is configured to detect if the weight W2 loaded on the truck 20 (or the weight W1 loaded onto the previous truck 10) is significantly lower than the target weight W, such as lower than the target weight W by a set weight difference value WΔ. This may be an indication of clogging of the material 40 in the silo 30 and the risk of a "ketchup effect" is higher for upcoming vehicles, and thus that the clogging of the silo 30 may need to be resolved, possibly be alerting an operator to manually resolve the clogging.

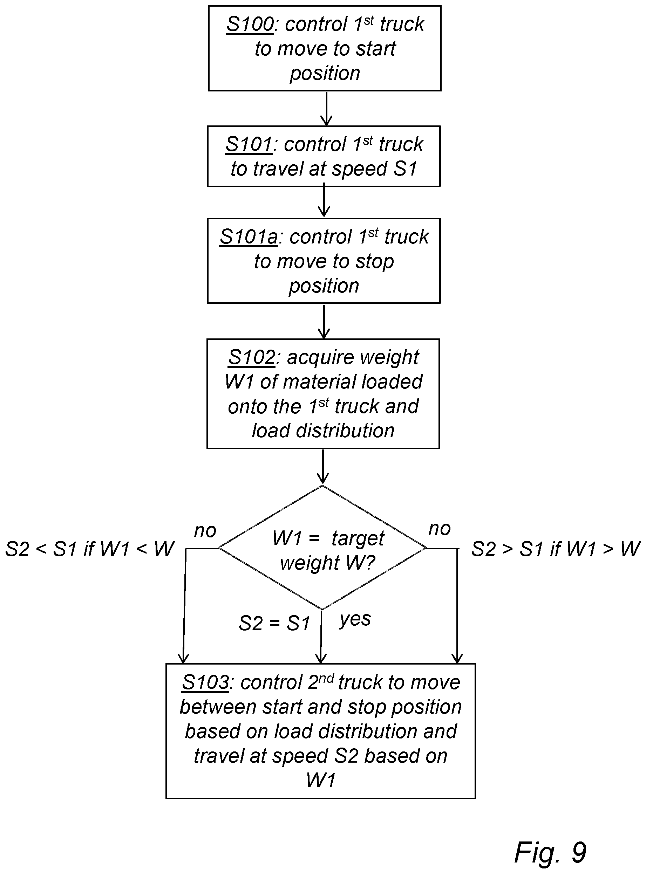

FIG. 9 shows a flowchart illustrating a further example of the disclosure, where start and stop position of a truck 10, 20 under the silo 30 is carefully selected in order to attain a desired distribution of the material 40 in the loading space 15, 25 of each truck 10, 20.

In S100, the server 18 controls the first truck 10 via the ECU 14 to move to a selected start position under the silo 30 upon loading the material 40 into the loading space 15 of the first truck.

The ECU 14 operates the truck 30 in S101 to move in a forward direction at a given speed S1 from the start position while having the silo 30 discharge the material 40 into the loading space 15.

In S101a, the ECU 14 controls the first truck 10 to move to a selected stop position under the silo 30 for attaining a desired distribution of the material 40 in the loading space 15.

For instance, if a front heavy distribution is desired, a start position under the silo 30 at, or close to, the front end of the loading space 15 is selected and the truck 10 is controlled to travel to a stop position further from the rear end of the loading space 15 than normal, i.e. on a selected distance from the rear end.

In contrast, if a rear heavy distribution is desired, a start position under the silo 30 further away from the front end of the loading space 15 than normal is selected (i.e. on a selected distance from the front end) and the truck 10 is controlled to travel to a stop position at, or close to, the rear end of the loading space 15.

As previously described, the first truck 10 is then operated by the server 18 and the ECU 14 to travel to an adjacently located scale for weighing the first truck 10 in order to acquire S 102 an indication of the weight W 1 of the material 40 being loaded into the loading space 15 of the first truck 10.

In this example, it may further be determined in S 102 whether or not the desired distribution of the material 40 in the loading space 15 is attained. In an example, this may be determined by measuring front axle load and/or rear axle load of the first truck 10.

Thereafter, similar to that already described with reference to S 103 in FIG. 3, the speed S2 with which the second truck 20 is controlled to travel under the silo 30 is determined based on the acquired weight W1 of the material 40 loaded onto the first truck 10.

In addition, in this example, the load distribution for the first truck 10 is taken into account in S103 for selecting a start and stop position of the second truck 20 under the silo 30, where a too high front axle load (e.g. exceeding a front load threshold value) for the previously loaded truck 10 indicates that the loaded material should be moved away from the front end of the loading space 25 of the second truck 20, while a too high rear axle load (e.g. exceeding a rear load threshold value) of the previously loaded truck 10 indicates that the loaded material should be moved towards the front end of the loading space 25 of the second truck 20. In contrast, if the desired load distribution is attained for the first truck 10, then the start and stop position that was used for the first truck 10 can also be selected for the second truck 20.

As is understood, the speed S1, S2 with which the first and second truck 10, 20 is controlled to travel under the silo 30 is not necessarily constant through said travel, but numerous different speed approaches may be envisaged, such as (a) fast start, medium mid-range, rapid slowdown, (b) slow start, high mid-range, slow slowdown, (c) slow start, fast slowdown, etc. Thus, the speed S1 and S2 may denote an average speed held by the first truck 10 and the second truck 20, respectively.

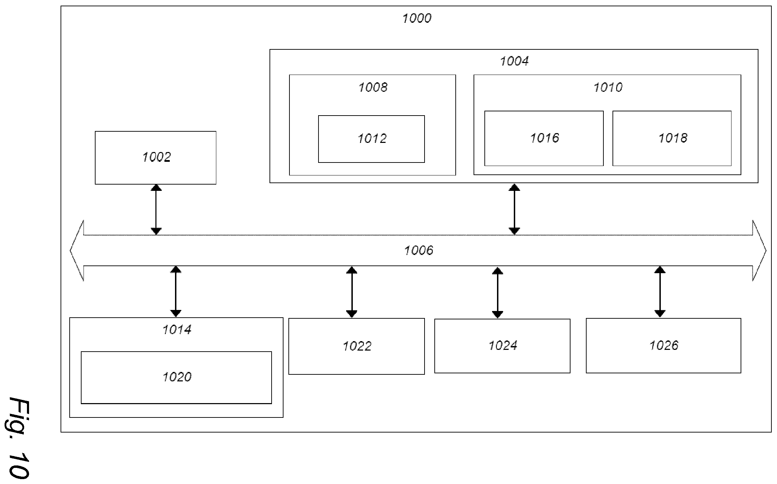

FIG. 10 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processor device 1002 (may also be referred to as a control unit), a memory 1004, and a system bus 1006. The computer system 1000 may include at least one computing device having the processor device 1002. The system bus 1006 provides an interface for system components including, but not limited to, the memory 1004 and the processor device 1002. The processor device 1002 may include any number of hardware components for conducting data or signal processing or for executing computer code stored in memory 1004. The processor device 1002 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processor device 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processor device 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program product 1020 stored on a transitory or non-transitory computer-usable or computer-readable storage medium (e.g., single medium or multiple media), such as the storage device 1014, which includes complex programming instructions (e.g., complex computer-readable program code) to cause the processor device 1002 to carry out actions described herein. Thus, the computer-readable program code can comprise software instructions for implementing the functionality of the examples described herein when executed by the processor device 1002. The processor device 1002 may serve as a controller or control system for the computer system 1000 that is to implement the functionality described herein.

The computer system 1000 also may include an input device interface 1022 (e.g., input device interface and/or output device interface). The input device interface 1022 may be configured to receive input and selections to be communicated to the computer system 1000 when executing instructions, such as from a keyboard, mouse, touch-sensitive surface, etc. Such input devices may be connected to the processor device 1002 through the input device interface 1022 coupled to the system bus 1006 but can be connected through other interfaces such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may also include a communications interface 1026 suitable for communicating with a network as appropriate or desired.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Example 1. A computer system (29) configured to control loading of material (40) from a silo (30) onto a vehicle (10, 20), the computer system comprising processing circuitry (26) configured to:

control (S101) a first vehicle (10) to drive according to a first speed profile (S1) for attaining a target weight (W) of the material (40) being discharged from the silo (30) into a loading space (15) of the first vehicle (10);
acquire (S102) an indication of a weight (W1) of the material (40) loaded into the loading space (15) of the first vehicle (10); and to
control (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

Example 2. The computer system (29) of example 1, the processing circuitry (26) further being configured to:

acquire an indication of a weight (W2) of the material (40) loaded into the loading space (25) of the second vehicle (20); and to
control a third vehicle to drive according to a third speed profile (S3) for attaining the target weight (W) of the material (40) being discharged from the silo (30) into a loading space of the third vehicle, the third speed profile (S3) being adapted to the second speed profile (S2) such that time spent under the silo (30) for the third vehicle is shorter than for the second vehicle (20) if the weight (W2) of the material (40) loaded onto the second vehicle (20) indicates that the target weight (W) was exceeded or such that time spent under the silo (30) for the third vehicle is longer than for the second vehicle (20) if the weight (W2) of the material (40) loaded onto the second vehicle (20) indicates that the target weight (W) was not reached.

Example 3. The computer system (29) of examples 1 or 2, the processing circuitry (26) further being configured to, upon acquiring (S102) an indication of a weight (W 1) of the material (40) loaded into the loading space (15) of the first vehicle (10):
acquire information identifying the silo (30) from which the first vehicle (10) was loaded and/or type of material being loaded onto the first vehicle (10), wherein the second speed profile (S2) of said second vehicle (20) is further adapted based on said information identifying the silo (30) and/or the type of material.

Example 4. The computer system (29) of any one of the preceding examples, wherein the first speed profile (S1) indicates that the first vehicle (10) should be driven under the silo (30) at a set first speed or at a varying speed with an average speed amounting to the set first speed.

Example 5. The computer system (29) of example 4, the first speed (S1) being set to a pre-stored reference speed (S1a, S1b, S1c) associated with the specific silo (30) from which the first vehicle (10) is loaded and/or the type of material (30) being loaded.

Example 6. The computer system (29) of examples 4 or 5, the processing circuitry (26) further being configured to, upon controlling (S103) the second vehicle (20) to drive according at the second speed profile (S2), set the speed of the second vehicle (20) to:

$$S2 = S1 * \frac{W}{W1}$$

where S2 represents the second speed, S1 represents the first speed, W represents the target weight and W1 represents the acquired weight of the material (40) loaded into the loading space (15) of the first vehicle (10).

Example 7. The computer system (29) of examples 4 or 5, the processing circuitry (26) further being configured to, upon controlling (S103) the second vehicle (20) to drive according to a second speed profile (S2):
adjust the second speed (S2) with respect to the first speed (S 1) in fixed steps based on a degree of overload or underload of the first vehicle (10) as compared to the target weight (W).

Example 8. The computer system (29) of any one of the preceding examples, the processing circuitry (26) further being configured to:
detect clogging of the material (40) in the silo (30) if the weight (W1, W2) of the material (40) loaded onto any of the vehicles (10, 20) is significantly lower than the target weight (W), such as lower than the target weight (W) by a set weight difference value (W∆).

Example 9. The computer system (29) of any one of the preceding examples, the processing circuitry (26) further being configured to:

control (S100) the first vehicle (10) to move to a selected start position under the silo (30) upon loading the material (40) into the loading space (15) of the first vehicle (10); and to

control (S101a) the first vehicle (10) to move to a selected stop position under the silo (30) upon loading the material (40) into the loading space (15) of the first vehicle (10) for attaining a desired distribution of the material (40) in the loading space (15), wherein the acquiring (S102) of an indication of a weight (W1) of the material (40) loaded into the loading space (15) of the first vehicle (10) further comprises to:

acquire information indicating a distribution of the material (40) in the loading space (15) of the first vehicle (10); and wherein the control (S103) of the second vehicle (20) to drive according to the second speed profile (S2) for attaining the target weight (W) of the material (40) being discharged from the silo (30) into a loading space (25) of the second vehicle (20) further comprises taking into account said start and stop position of the first vehicle (10) for attaining a desired distribution of the material (40) in the loading space (25) of the second vehicle (20).

Example 10. The computer system (29) of example 9, the processing circuitry (26) further being configured to, upon controlling (S103) the second vehicle (20) to drive according to a second speed profile (S2): select a start position at the front end of the loading space (25) and a stop position on a selected distance from the rear end of the loading space (25), if a rear heavy distribution is desired.

Example 11. The computer system (29) of examples 9 or 10, the processing circuitry (26) further being configured to, upon controlling (S103) the second vehicle (20) to drive according to a second speed profile (S2): select a start position on a selected distance from the front end of the loading space (25) and a stop position at the rear end of the loading space (25), if a front heavy distribution is desired.

Example 12. The computer system (29) of any one of examples 9-11, the front axle and/or rear axle of the vehicle (10) being measured for acquiring the information indicating a distribution of the material (40) in the loading space (15) of the first vehicle (10), wherein a front axle load exceeding a front load threshold value indicates that the loaded material (40) should be moved away from the front end of the loading space (25) of the second vehicle (20), while a rear axle load exceeding a rear load threshold indicates that the loaded material should be moved towards the front end of the loading space (25) of the second vehicle (20).

Example 13. The computer system (29) of any one of the preceding examples, the processing circuitry (26) being configured to:

autonomously control operation of the vehicles (10, 20) and the discharging of the material (40) from the silo (30).

Example 14. A server (18) comprising the computer system (29) of any of examples 1-13.

Example 15. A computer system (14) of a vehicle (20) configured to control loading of material (40) from a silo (30) onto the vehicle (20), the computer system comprising processing circuitry (11) configured to:

acquire (S102) an indication of a weight (W1) of material (40) being discharged from the silo (30) into a loading space (15) of a previous vehicle (10); and to control (S103) the vehicle (20) to be loaded to drive according to a second speed profile (S2) for attaining a target weight (W) of the material (40) being discharged from the silo (30) into a loading space (25) of the vehicle (20) to be loaded, the second speed profile (S2) being adapted to a speed profile (S1) of the previous vehicle (10) such that time spent under the silo (30) for the second vehicle (20) is shorter than for the first vehicle (10) if the weight (W1) of the material (40) loaded onto the previous vehicle (10) indicates that the target weight (W) was exceeded or such that time spent under the silo (30) for the second vehicle (20) is longer than for the previous vehicle (10) if the weight (W1) of the material (40) loaded onto the previous vehicle (10) indicates that the target weight (W) was not reached.

Example 16. A vehicle (20) comprising the computer system (14) of example 15.

Example 17. The vehicle (20) of example 16, further being configured to be autonomous or semi-autonomous.

Example 18. A method of a device (18) configured to control loading of material (40) from a silo (30) onto a vehicle (10, 20), comprising:

controlling (S101) a first vehicle (10) to drive according to a first speed profile (S1) for attaining a target weight (W) of the material (40) being discharged from the silo (30) into a loading space (15) of the first vehicle (10); acquiring (S102) an indication of a weight (W1) of the material (40) loaded into the loading space (15) of the first vehicle (10); and controlling (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

Example 19. A computer program product comprising program code (27) for performing, when executed by the processing circuitry (26), the method of example 18.

Example 20. A non-transitory computer-readable storage medium (28) comprising instructions (27), which when executed by the processing circuitry (26), cause the processing circuitry (29) to perform the method of example 18.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (29) configured to control loading of material (40) from a silo (30) onto a vehicle (10, 20), the computer system comprising processing circuitry (26) configured to:

   control (S101) a first vehicle (10) to drive according to a first speed profile (S1) for attaining a target weight (W) of the material (40) being discharged from the silo (30) into a loading space (15) of the first vehicle (10);
   acquire (S102) an indication of a weight (W1) of the material (40) loaded into the loading space (15) of the first vehicle (10); and to
   control (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

2. The computer system (29) of claim 1, the processing circuitry (26) further being configured to:

   acquire an indication of a weight (W2) of the material (40) loaded into the loading space (25) of the second vehicle (20); and to
   control a third vehicle to drive according to a third speed profile (S3) for attaining the target weight (W) of the material (40) being discharged from the silo (30) into a loading space of the third vehicle, the third speed profile (S3) being adapted to the second speed profile (S2) such that time spent under the silo (30) for the third vehicle is shorter than for the second vehicle (20) if the weight (W2) of the material (40) loaded onto the second vehicle (20) indicates that the target weight (W) was exceeded or such that time spent under the silo (30) for the third vehicle is longer than for the second vehicle (20) if the weight (W2) of the material (40) loaded onto the second vehicle (20) indicates that the target weight (W) was not reached.

3. The computer system (29) of claims 1 or 2, the processing circuitry (26) further being configured to, upon acquiring (S102) an indication of a weight (W1) of the material (40) loaded into the loading space (15) of the first vehicle (10):
   acquire information identifying the silo (30) from which the first vehicle (10) was loaded and/or type of material being loaded onto the first vehicle (10), wherein the second speed profile (S2) of said second vehicle (20) is further adapted based on said information identifying the silo (30) and/or the type of material.

4. The computer system (29) of any one of the preceding claims, wherein the first speed profile (S1) indicates that the first vehicle (10) should be driven under the silo (30) at a set first speed or at a varying speed with an average speed amounting to the set first speed.

5. The computer system (29) of claim 4, the processing circuitry (26) further being configured to, upon controlling (S103) the second vehicle (20) to drive according at the second speed profile (S2), set the speed of the second vehicle (20) to:

$$S2 = S1 * \frac{W}{W1}$$

where S2 represents the second speed, S1 represents the first speed, W represents the target weight and W1 represents the acquired weight of the material (40) loaded into the loading space (15) of the first vehicle (10).

6. The computer system (29) of any one of the preceding claims, the processing circuitry (26) further being configured to:
detect clogging of the material (40) in the silo (30) if the weight (W1, W2) of the material (40) loaded onto any of the vehicles (10, 20) is significantly lower than the target weight (W), such as lower than the target weight (W) by a set weight difference value (WΔ).

7. The computer system (29) of any one of the preceding claims, the processing circuitry (26) further being configured to:

control (S 100) the first vehicle (10) to move to a selected start position under the silo (30) upon loading the material (40) into the loading space (15) of the first vehicle (10); and to
control (S101a) the first vehicle (10) to move to a selected stop position under the silo (30) upon loading the material (40) into the loading space (15) of the first vehicle (10) for attaining a desired distribution of the material (40) in the loading space (15), wherein the acquiring (S102) of an indication of a weight (W1) of the material (40) loaded into the loading space (15) of the first vehicle (10) further comprises to:

acquire information indicating a distribution of the material (40) in the loading space (15) of the first vehicle (10); and wherein
the control (S103) of the second vehicle (20) to drive according to the second speed profile (S2) for attaining the target weight (W) of the material (40) being discharged from the silo (30) into a loading space (25) of the second vehicle (20) further comprises taking into account said start and stop position of the first vehicle (10) for attaining a desired distribution of the material (40) in the loading space (25) of the second vehicle (20).

8. The computer system (29) of claim 7, the processing circuitry (26) further being configured to, upon controlling (S103) the second vehicle (20) to drive according to a second speed profile (S2):
select a start position at the front end of the loading space (25) and a stop position on a selected distance from the rear end of the loading space (25), if a rear heavy distribution is desired.

9. The computer system (29) of claims 7 or 8, the processing circuitry (26) further being configured to, upon controlling (S103) the second vehicle (20) to drive according to a second speed profile (S2):
select a start position on a selected distance from the front end of the loading space (25) and a stop position at the rear end of the loading space (25), if a front heavy distribution is desired.

10. A server (18) comprising the computer system (29) of any of claims 1-9.

11. A computer system (14) of a vehicle (20) configured to control loading of material (40) from a silo (30) onto the vehicle (20), the computer system comprising processing circuitry (11) configured to:

acquire (S102) an indication of a weight (W1) of material (40) being discharged from the silo (30) into a loading space (15) of a previous vehicle (10); and to
control (S103) the vehicle (20) to be loaded to drive according to a second speed profile (S2) for attaining a target weight (W) of the material (40) being discharged from the silo (30) into a loading space (25) of the vehicle (20) to be loaded, the second speed profile (S2) being adapted to a speed profile (S1) of the previous vehicle (10) such that time spent under the silo (30) for the second vehicle (20) is shorter than for the first vehicle (10) if the weight (W1) of the material (40) loaded onto the previous vehicle (10) indicates that the target weight (W) was exceeded or such that time spent under the silo (30) for the second vehicle (20) is longer than for the previous vehicle (10) if the weight (W1) of the material (40) loaded onto the previous vehicle (10) indicates that the target weight (W) was not reached.

12. A vehicle (20) comprising the computer system (14) of claim 11.

13. A method of a device (18) configured to control loading of material (40) from a silo (30) onto a vehicle (10, 20), comprising:

controlling (5101) a first vehicle (10) to drive according to a first speed profile (S1) for attaining a target weight (W) of the material (40) being discharged from the silo (30) into a loading space (15) of the first vehicle (10);
acquiring (S102) an indication of a weight (W1) of the material (40) loaded into the loading space (15) of the first vehicle (10); and
controlling (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

14. A computer program product comprising program code (27) for performing, when executed by the processing circuitry (26), the method of claim 13.

15. A non-transitory computer-readable storage medium (28) comprising instructions (27), which when executed by the processing circuitry (26), cause the processing circuitry (29) to perform the method of claim 13.

**Amended claims in accordance with Rule 137(2) EPC.**

1. A computer system (29) configured to control loading of material (40) from a silo (30) onto a vehicle (10, 20), the computer system comprising processing circuitry (26) **characterized in** being configured to:

   control (S101) a first vehicle (10) to drive according to a first speed profile (S1) for attaining a target weight (W) of the material (40) being discharged from the silo (30) into a loading space (15) of the first vehicle (10); acquire (S102) an indication of a weight (W1) of the material (40) loaded into the loading space (15) of the first vehicle (10); and to control (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

2. The computer system (29) of claim 1, the processing circuitry (26) further being configured to:

   acquire an indication of a weight (W2) of the material (40) loaded into the loading space (25) of the second vehicle (20); and to control a third vehicle to drive according to a third speed profile (S3) for attaining the target weight (W) of the material (40) being discharged from the silo (30) into a loading space of the third vehicle, the third speed profile (S3) being adapted to the second speed profile (S2) such that time spent under the silo (30) for the third vehicle is shorter than for the second vehicle (20) if the weight (W2) of the material (40) loaded onto the second vehicle (20) indicates that the target weight (W) was exceeded or such that time spent under the silo (30) for the third vehicle is longer than for the second vehicle (20) if the weight (W2) of the material (40) loaded onto the second vehicle (20) indicates that the target weight (W) was not reached.

3. The computer system (29) of claims 1 or 2, the processing circuitry (26) further being configured to, upon acquiring (S102) an indication of a weight (W1) of the material (40) loaded into the loading space (15) of the first vehicle (10):
   acquire information identifying the silo (30) from which the first vehicle (10) was loaded and/or type of material being loaded onto the first vehicle (10), wherein the second speed profile (S2) of said second vehicle (20) is further adapted based on said information identifying the silo (30) and/or the type of material.

4. The computer system (29) of any one of the preceding claims, wherein the first speed profile (S1) indicates that the first vehicle (10) should be driven under the silo (30) at a set first speed or at a varying speed with an average speed amounting to the set first speed.

5. The computer system (29) of claim 4, the processing circuitry (26) further being configured to, upon controlling (S103) the second vehicle (20) to drive according at the second speed profile (S2), set the speed of the second vehicle (20) to:

$$S2 = S1 * \frac{W}{W1}$$

where S2 represents the second speed, S1 represents the first speed, W represents the target weight and W1 represents the acquired weight of the material (40) loaded into the loading space (15) of the first vehicle (10).

6. The computer system (29) of any one of the preceding claims, the processing circuitry (26) further being configured to:
detect clogging of the material (40) in the silo (30) if the weight (W1, W2) of the material (40) loaded onto any of the vehicles (10, 20) is significantly lower than the target weight (W), such as lower than the target weight (W) by a set weight difference value (W∆).

7. The computer system (29) of any one of the preceding claims, the processing circuitry (26) further being configured to:

control (S100) the first vehicle (10) to move to a selected start position under the silo (30) upon loading the material (40) into the loading space (15) of the first vehicle (10); and to
control (S101a) the first vehicle (10) to move to a selected stop position under the silo (30) upon loading the material (40) into the loading space (15) of the first vehicle (10) for attaining a desired distribution of the material (40) in the loading space (15), wherein the acquiring (S102) of an indication of a weight (W1) of the material (40) loaded into the loading space (15) of the first vehicle (10) further comprises to:

acquire information indicating a distribution of the material (40) in the loading space (15) of the first vehicle (10); and wherein the control (S103) of the second vehicle (20) to drive according to the second speed profile (S2) for attaining the target weight (W) of the material (40) being discharged from the silo (30) into a loading space (25) of the second vehicle (20) further comprises taking into account said start and stop position of the first vehicle (10) for attaining a desired distribution of the material (40) in the loading space (25) of the second vehicle (20).

8. The computer system (29) of claim 7, the processing circuitry (26) further being configured to, upon controlling (S103) the second vehicle (20) to drive according to a second speed profile (S2):
select a start position at the front end of the loading space (25) and a stop position on a selected distance from the rear end of the loading space (25), if a rear heavy distribution is desired.

9. The computer system (29) of claims 7 or 8, the processing circuitry (26) further being configured to, upon controlling (S103) the second vehicle (20) to drive according to a second speed profile (S2):

select a start position on a selected distance from the front end of the loading space (25) and a stop position at the rear end of the loading space (25), if a front heavy distribution is desired.

10. A device (18) comprising the computer system (29) of any of claims 1-9.

11. A computer system (14) of a vehicle (20) configured to control loading of material (40) from a silo (30) onto the vehicle (20), the computer system comprising processing circuitry (11) **characterized in** being configured to:

acquire (S102) an indication of a weight (W1) of material (40) being discharged from the silo (30) into a loading space (15) of a previous vehicle (10); and to
control (S103) the vehicle (20) to be loaded to drive according to a second speed profile (S2) for attaining a target weight (W) of the material (40) being discharged from the silo (30) into a loading space (25) of the vehicle (20) to be loaded, the second speed profile (S2) being adapted to a speed profile (S1) of the previous vehicle (10) such that time spent under the silo (30) for the second vehicle (20) is shorter than for the first vehicle (10) if the weight (W1) of the material (40) loaded onto the previous vehicle (10) indicates that the target weight (W) was exceeded or such that time spent under the silo (30) for the second vehicle (20) is longer than for the previous vehicle (10) if the weight (W1) of the material (40) loaded onto the previous vehicle (10) indicates that the target weight (W) was not reached.

12. A vehicle (20) comprising the computer system (14) of claim 11.

13. A method of a device (18) configured to control loading of material (40) from a silo (30) onto a vehicle (10, 20), **characterized in** comprising:

controlling (S101) a first vehicle (10) to drive according to a first speed profile (S1) for attaining a target weight (W) of the material (40) being discharged from the silo (30) into a loading space (15) of the first vehicle (10);
acquiring (S102) an indication of a weight (W1) of the material (40) loaded into the loading space (15) of the first vehicle (10); and
controlling (S103) a second vehicle (20) to drive according to a second speed profile (S2) for attaining the target weight (W) of the material (40) being discharged from the silo (30) into a loading space (25) of the second vehicle (20), the second speed profile (S2) being adapted to the first speed profile (S1) such that time spent under the silo (30) for the second vehicle (20) is shorter than for the first vehicle (10) if the weight (W1) of the material (40) loaded onto the first vehicle (10) indicates that the target weight (W) was exceeded or such that time spent under the silo (30) for the second vehicle (20) is longer than for the first vehicle (10) if the weight (W1) of the material (40) loaded onto the first vehicle (10) indicates that the target weight (W) was not reached.

14. A computer program product comprising program code (27) for performing, when executed by processing circuitry (26), the method of claim 13.

15. A non-transitory computer-readable storage medium (28) comprising instructions (27), which when executed by processing circuitry (26), cause the processing circuitry (26) to perform the method of claim 13.

Fig. 1

Fig. 2

*Fig. 3*

*Fig. 4*

*Fig. 5*

$$S101: \text{control 1}^{st} \text{ truck to travel at speed } S1$$

$$S102: \text{acquire weight } W1 \text{ of material loaded onto the 1}^{st} \text{ truck}$$

W1 = target weight W?

S2 < S1 if W1 < W    no      no    S2 > S1 if W1 > W

S2 = S1    yes

$$S103: \text{control 2}^{nd} \text{ truck to travel at speed } S2 \text{ based on } W1$$

*Fig. 6*

*Fig. 7*

*Fig. 8*

```
┌─────────────────────────┐
│ S100: control 1st truck │
│     to move to start    │
│        position         │
└─────────────────────────┘
             │
             ▼
┌─────────────────────────┐
│ S101: control 1st truck │
│   to travel at speed S1 │
└─────────────────────────┘
             │
             ▼
┌─────────────────────────┐
│ S101a: control 1st truck│
│     to move to stop     │
│        position         │
└─────────────────────────┘
             │
             ▼
┌─────────────────────────┐
│  S102: acquire weight   │
│ W1 of material loaded   │
│  onto the 1st truck and │
│    load distribution    │
└─────────────────────────┘
             │
             ▼
```

no          ◇ W1 = target          no
S2 < S1 if W1 < W    weight W?    S2 > S1 if W1 > W

S2 = S1    yes

```
┌──────────────────────────────┐
│  S103: control 2nd truck to   │
│  move between start and stop  │
│ position based on load        │
│ distribution and travel at    │
│    speed S2 based on W1       │
└──────────────────────────────┘
```

*Fig. 9*

Fig. 10

Europäisches
Patentamt

European
Patent Office

Office européen
des brevets

## EUROPEAN SEARCH REPORT

**Application Number**

EP 24 20 7490

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SU 806 579 A1 (KI I AVTOMATIKI IM KHKHU SEZDA [SU]) 23 February 1981 (1981-02-23) | 1,2,4,6, 10,11, 13-15 | INV. B65G43/00 B65G67/04 |
| A | * column 1, line 1 - column 2, line 17; figure 1 * ----- | 3,5,7-9, 12 | B65G67/06 B65G67/22 E02F9/20 |
| A | CN 115 367 494 A (COAL WASHING BRANCH OF GUONENG BAOTOU ENERGY CO LTD ET AL.) 22 November 2022 (2022-11-22) * claims 1-6; figure 4 * ----- | 1,11,13 | G06Q10/08 |
| A | DE 202 11 181 U1 (ISAM AG [DE]) 9 January 2003 (2003-01-09) * page 16, paragraph 3; figure 1 * ----- | 1,11,13 | |

**TECHNICAL FIELDS SEARCHED (IPC)**

B65G
E02F
G06Q

The present search report has been drawn up for all claims

| Place of search | Date of completion of the search | Examiner |
|---|---|---|
| The Hague | 24 March 2025 | Thenert, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................................
& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 20 7490

This annex lists the patent family members relating to the patent documents cited in  the above-mentioned European search report.
The members are as contained in the European Patent Office EDP file on
The European Patent Office is in no way liable for these particulars which are merely given for the purpose of information.

24-03-2025

| Patent document cited in search report | | Publication date | Patent family member(s) | Publication date |
|---|---|---|---|---|
| SU 806579 | A1 | 23-02-1981 | NONE | |
| CN 115367494 | A | 22-11-2022 | NONE | |
| DE 20211181 | U1 | 09-01-2003 | NONE | |

EPO FORM P0459

For more details about this annex : see Official Journal of the European Patent Office, No. 12/82